# FASCICULE DE BREVET EUROPEEN

(11) **EP 3 138 180 B1**
(45) Date de publication et mention de la délivrance du brevet: **10.06.2026**
(21) Numéro de dépôt: 15786538.7
(22) Date de dépôt: 29.04.2015
(51) Int. Cl.: H02J 7/00, B60R 16/02

(54) **SYSTÈME DE RECHARGE BIDIRECTIONNELLE POUR VÉHICULE ÉLECTRIQUE**
BIDIREKTIONALES AUFLADESYSTEM FÜR EIN ELEKTROFAHRZEUG
BIDIRECTIONAL CHARGING SYSTEM FOR AN ELECTRIC VEHICLE

(30) Priorité: 29.04.2014 CA 2850718; 29.04.2014 CA 2850684; 29.04.2014 CA 2850683; 29.04.2014 CA 2850726
(43) Date de publication de la demande: 08.03.2017
(73) Titulaire: Hydro-Québec, Montréal QC H2Z 1A4 (CA)
(72) Inventeur: LAMBERT, Ghislain, Saint-Mathieu de Beloeil, Québec J3G 2C9 (CA); LAVOIE, Samuel, Ste-Julie, Québec J3E 1T6 (CA); LECOURTOIS, Éric, Shawinigan, Québec G9N 7X5 (CA); GIUMENTO, Angelo, Ville St-Laurent, Québec H4R 0E4 (CA); LAGACE, Marin, St-Bruno de Montarville, Québec J3V 1Y6 (CA); DUPRÉ, Jean-Luc, Saint-Eustache, Québec J7R 7H2 (CA); PATAULT, Louis-André, Montréal, Québec H3W 2H9 (CA); BOUDJERIDA, Nacer, Brossard, Québec J4Y 1E4 (CA); ZAGHIB, Karim, Longueuil, Québec J4N 1T8 (CA); PERREAULT, Éric, Carignan, Québec J3L 5B9 (CA)
(74) Mandataire: Lang, Johannes
(86) Numéro de dépôt international: PCT/CA2015/050356
(87) Numéro de publication internationale: WO 2015/164967

(56) Documents cités:
- EP-A1- 2 602 900
- WO-A1-2013/055830
- WO-A1-2013/097824
- WO-A2-2011/103249
- FR-A1- 2 992 779
- US-A1- 2011 202 418
- US-A1- 2011 245 987

## Description

### DOMAINE DE L'INVENTION

La présente invention est relative à un système de recharge bidirectionnelle pour véhicule électrique.

### CONTEXTE DE L'INVENTION

Typiquement, les véhicules électriques (par exemple, les véhicules alimentés par batterie et les véhicules hybrides « plug-in ») sont rechargés d'une manière similaire à ceux utilisés pour charger les appareils alimentés par piles rechargeables. Autrement dit, l'opérateur branche la fiche de la borne dans le réceptacle du véhicule, prévu à cette fin. Le chargeur, installé dans le véhicule commence immédiatement la charge de la batterie du véhicule. Ce chargeur est unidirectionnel, c'est-à-dire que la charge se fait en direction du véhicule. La vitesse à laquelle la batterie du véhicule est chargée est généralement le résultat de la limite actuelle imposée par l'électronique du chargeur et la capacité de la borne. Le chargeur d'un véhicule peut contenir de la logique explicite ou des composants pour modifier le taux de charge, afin de prolonger la durée de vie de la batterie du véhicule. En règle générale, il n'y a pas de composants supplémentaires pour le contrôle du taux de charge déterminé par d'autres facteurs.

Par ailleurs, dans le contexte des véhicules électriques rechargeables, on connait l'utilisation de chargeurs bidirectionnels situés dans la borne de recharge. Dans ce cas, le véhicule électrique ne contient aucun chargeur et la batterie du véhicule est directement reliée au chargeur bidirectionnel situé dans la borne de recharge externe.
WO 20011/103249 A2 (GREENWARE REALITY PTE LTD [SG], CHRISTENSEN PETER [DK]), 25 aout 2011 (2011-08-25), concerne un système de transfert de puissance pour une batterie rechargeable.
US 2011/245987 A1 (PRATT RICHARD M [US] ET AL), 6 octobre 2011 (2011-10-06) concerne des services de régulation d'une grille pour des appareils de stockage d'énergie basée sur la fréquence de la grille.
EP 2 602 900 A1 (MITSUBISHI MOTORS CORP [JP]; MITSUBISHI CORP [JP]; MITSUBISHI ELECTRIC), 12 juin 2013 (2013-06-12), concerne un dispositif de sortie d'informations de batterie pour système de mise à niveau d'alimentation/demande électrique.
FR 2 992 779 A1 (RENAULT SA [FR]), 3 janvier 2014 (2014-01-03), concerne un dispositif de sortie d'information sur une batterie pour un système de gestion du niveau offre/demande d'énergie.

### OBJET DE L'INVENTION

L'invention concerne un système de recharge bidirectionnelle pour véhicule électrique selon la revendication indépendante 1. Un autre objet de l'invention est visé par la revendication dépendante 2.

Un premier aspect de l'invention non couvert par les revendications annexées est de fournir un système de recharge bidirectionnelle pour véhicule électrique, comprenant une borne bidirectionnelle raccordée au réseau électrique, un véhicule électrique apte à être branché à la borne, un panneau de commande accessible à partir de la borne et un moyen de communication au système de contrôle du réseau électrique, ledit véhicule intégrant un chargeur bidirectionnel, ledit chargeur bidirectionnel permettant le transfert d'énergie électrique de la borne à la batterie du véhicule et l'inverse, dans lequel l'utilisateur dudit véhicule peut spécifier le niveau de charge minimale de la batterie via le panneau de commande de la borne.

Un deuxième aspect de l'invention non couvert par les revendications annexées est de fournir un système de recharge bidirectionnelle pour véhicule électrique, comprenant une borne bidirectionnelle raccordée au réseau électrique, un véhicule électrique apte à être branché à la borne, une sortie de puissance électrique pour alimenter les charges critiques et un panneau de commande accessible à partir de la borne, un chargeur bidirectionnel permettant le transfert d'énergie électrique de la borne à la batterie du véhicule et l'inverse, dans lequel l'utilisateur peut accepter ou refuser que l'énergie du véhicule soit utilisée pour alimenter des charges critiques lorsque le réseau électrique principale est absent.

Un troisième aspect de l'invention non couvert par les revendications annexées est de fournir un véhicule électrique comprenant un système de propulsion électrique à moteur central et un système de gestion véhicule, dans lequel que le véhicule intègre un chargeur bidirectionnel et une batterie LiFePo4.

### BRÈVE DESCRIPTION DES FIGURES

La Figure 1 est un diagramme schématique montrant un système de recharge bidirectionnelle pour véhicule électrique, selon un premier aspect de l'invention non couvert par les revendications annexées.
La Figure 2 est un diagramme schématique montrant un système de recharge bidirectionnelle pour véhicule électrique, selon un deuxième aspect de l'invention non couvert par les revendications annexées.
La Figure 3 est un diagramme schématique montrant un système de recharge bidirectionnelle pour véhicule électrique, selon la réalisation préférentielle de la présente invention.
La Figure 4 est un diagramme schématique montrant un système de recharge bidirectionnelle pour véhicule électrique, selon un troisième aspect de l'invention non couvert par les revendications annexées.

### DESCRIPTION DES ASPECTS RELATIFS À L'INVENTION ET DE LA RÉALISATION PRÉFÉRENTIELLE DE L'INVENTION

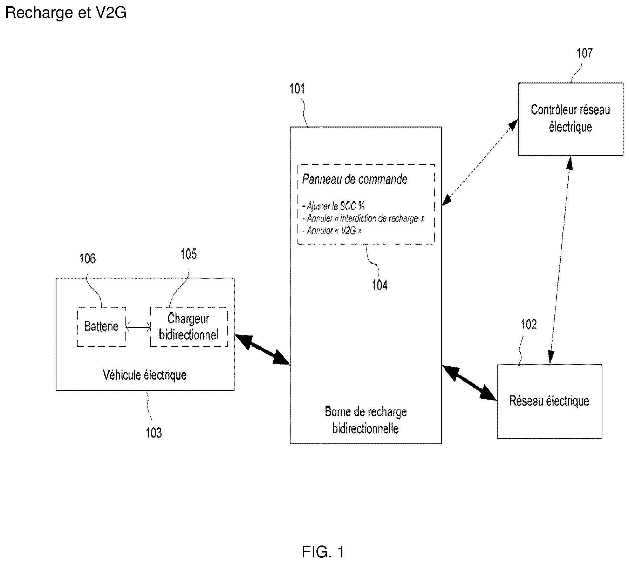

En référence à la Figure 1, on montre un système de recharge bidirectionnelle pour véhicule électrique comprenant une borne bidirectionnelle 101 raccordée au réseau électrique 102. Le véhicule électrique 103 est branché à la borne 101 via un câble. Le système comporte un panneau de commande 104 accessible à partir de la borne 101 et un moyen de communication au système de contrôle du réseau électrique 107. Le véhicule intègre un chargeur bidirectionnel 105, ce qui est différent des véhicules connus qui n'en contiennent pas ou en contiennent un unidirectionnel. Le chargeur bidirectionnel 105 permet le transfert d'énergie électrique de la borne 101 à la batterie 106 du véhicule et l'inverse. L'utilisateur dudit véhicule peut spécifier le niveau de charge (SOC% ou « State of Charge ») minimale de la batterie 106 via le panneau de commande 104 de la borne 101.

Le chargeur bidirectionnel permet 105 l'échange d'énergie électrique entre le véhicule électrique 103 et le réseau électrique 102. Dans le contexte d'un système « vehicle-to-grid (V2G) » des véhicules électriques (VE), communiquent automatiquement avec le réseau électrique 102 afin de vendre des surplus d'électricité ou en diminuant des taux de charge. Ce système vise à utiliser l'énergie stockée dans les batteries des véhicules électriques (VE) comme source d'appoint pour alimenter en électricité le réseau électrique 102, par exemple, durant des pointes de consommation.

Le chargeur bidirectionnel 105 permet également à la batterie du véhicule électrique 103 d'alimenter directement le circuit principal d'une maison lors de pannes d'alimentation (communément appelé « vehicle-to-home » ou V2H). Ceci permet au propriétaire du véhicule électrique (VE) d'utiliser l'énergie emmagasinée dans la batterie du véhicule comme source d'électricité temporaire de son domicile, au même titre qu'une génératrice.

L'avantage principal du chargeur bidirectionnel 105 qui est intégré au véhicule électrique 103 est d'avoir une source de courant à tension alternative (AC) en tout temps sans nécessiter le besoin d'une borne particulière. En fait, le chargeur bidirectionnel 105 étant intégré au véhicule 103, il suffit de communiquer avec celui-ci pour qu'il délivre la tension à la prise de recharge du véhicule 103. Cette fonctionnalité est permise uniquement en réseau ilôté.

Des essais routiers de juillet à août 2013 ont permis d'évaluer un certain nombre de caractéristiques d'un véhicule électrique ayant une autonomie de 96km dans des conditions estivales. Le tableau 1 ci-dessous donne des résultats des essais.

| Date | SOC% Départ | Distance (km) | SOC% Arrivée | Temp. Batt. (°C) |
|---|---|---|---|---|
| 31 juil. 2013 | 97 | 21.1 | 72.2 | 28 |
| 31 juil. 2013 | 84.6 | 22.5 | 63 | 32 |
| 1 août 2013 | 82.7 | 21.4 | 60.8 | 30 |
| 1 août 2013 | 79.7 | 25 | 54.7 | 32 |
| 5 août 2013 | 76.6 | 21.4 | 52.2 | 22 |

Ainsi, par exemple, l'utilisateur peut spécifier le niveau de charge (SOC%) minimale de la batterie 106 via le panneau de commande 104 de la borne 101 qui peut être compris entre 0% et 60% d'une charge maximale de la batterie 106. Le niveau de charge (SOC%) minimale correspondrait au niveau de charge de départ dans le tableau ci-dessus et entraînerait une diminution de la distance que pourrait parcourir le véhicule, mais donnerait à l'utilisateur la possibilité de vendre l'énergie emmagasiné dans la batterie 106 au gestionnaire du réseau électrique 102.

En pratique, l'utilisateur peut régler le niveau de charge minimale comme il le désire, selon ses propres besoins. On appelle aussi le niveau de charge minimale le seuil critique : c'est le % de recharge de la batterie que l'utilisateur veut garder dans sa voiture. Par exemple, si l'utilisateur sait qu'il n'utilise pas sa voiture avant le lendemain après-midi, il peut fixer ce seuil à 10%, puis le lendemain matin, il va le fixer à 50% car il doit partir en après-midi et va avoir besoin de la moitié de l'autonomie offerte par sa batterie.

En mode recharge, le chargeur bidirectionnel 105 convertit la tension à courant alternatif (AC) en tension à courant continu (DC). En mode V2G/V2H, le chargeur bidirectionnel 105 convertit la tension à courant continu (DC) en tension à courant alternatif (AC). Le chargeur bidirectionnel 105 est situé sous le véhicule 103 à proximité du groupe motopropulseur.

Comme expliqué ci-dessus, le réseau électrique 102 peut faire des demandes d'énergie automatiquement à la borne 101 via le contrôleur du réseau électrique 107, notamment lors de pointes de consommation. La borne 101 peut être programmée par l'entremise du panneau de commande 104 pour que la borne 101 accepte automatiquement une demande d'interdiction de recharge. Ainsi, lorsque le contrôleur du réseau électrique 107 constate, par exemple, que le réseau a besoin d'un surplus d'énergie, il envoie un message de demande d'interdiction de recharge à la borne 101 et la borne 101 empêche automatiquement la recharge de la batterie 106 du véhicule 103. Cette configuration peut permettre à l'utilisateur du véhicule 103 de bénéficier d'un rabais ou escompte de la part du gestionnaire du réseau électrique 102.

Par contre, l'utilisateur peut annuler une limitation totale de recharge commandée par le système de contrôle de gestion du réseau électrique 107 via le panneau de commande 104 de la borne. Avec cette option, l'utilisateur peut donc s'assurer que sa batterie 106 ne sera pas déchargée par la borne 101 lors d'une demande d'interdiction de recharge, mais en contrepartie, l'utilisateur n'aura pas de rabais ou escompte de la part du gestionnaire du réseau électrique 102.

Par ailleurs, lorsque le réseau électrique 102 effectue des demandes d'énergie à la borne 101 via le contrôleur du réseau électrique 107, l'utilisateur peut annuler la demande de transfert d'énergie du véhicule vers le réseau électrique (V2G : « Vehicle to Grid ») commandée par le système de contrôle du réseau électrique 107 via le panneau de commande 104 de la borne.

De préférence, l'utilisateur peut ajuster le niveau de charge minimal de la batterie du véhicule en fonction temps par un calendrier via le panneau de commande 104 de la borne.

De préférence, l'utilisateur peut imposer un niveau de charge de la batterie du véhicule à un temps précis via le panneau de commande 104 de la borne.

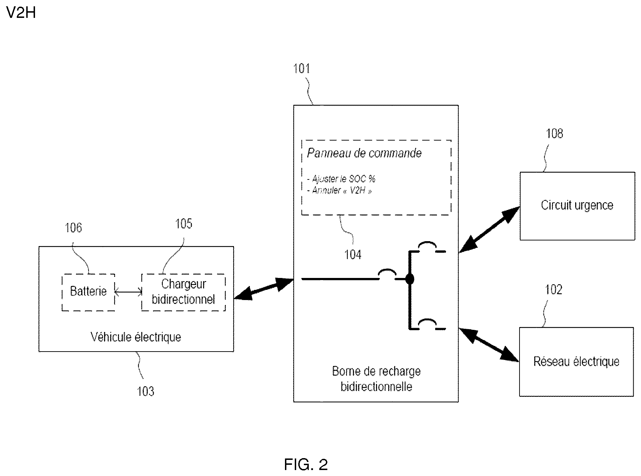

En référence à la Figure 2, on montre un système de recharge bidirectionnelle pour véhicule électrique comprenant une borne bidirectionnelle 101 raccordée au réseau électrique 102. Le véhicule électrique 103 est branché à la borne 101 via un câble. La borne 101 comprend une sortie de puissance électrique permettant d'alimenter des charges critiques dans un circuit d'urgence 108 et un panneau de commande 104 accessible à partir de la borne 101. Le véhicule peut intégrer un chargeur bidirectionnel 105, mais le chargeur bidirectionnel 105 peut aussi être intégré dans la borne 101. Le chargeur bidirectionnel 105 permet le transfert d'énergie électrique de la borne à la batterie 106 du véhicule 103 et l'inverse. L'utilisateur peut accepter ou refuser que l'énergie du véhicule soit utilisée pour alimenter des charges critiques 108 lorsque le réseau électrique principal 102 est absent.

Ainsi, le système ci-dessus peut être très utile lors d'une panne de courant du réseau électrique 102 qui résulte souvent dans le délestage de divers quartiers. Dans ce cas, lorsque l'utilisateur programme la borne 101 pour alimenter uniquement des charges critiques 108, la batterie 106 du véhicule 103 peut prendre en charge une partie de l'alimentation d'une maison comme, par exemple, la cuisine. Bien entendu, la maison peut aussi être un édifice, un commerce, une institution, une entreprise, etc.

Le concept V2H (« vehicle-to-home ») permet le partage mutuel des charges entre des véhicules hybrides « plug-in », des véhicules électriques rechargeables et le système électrique d'une maison ou habitation.

De préférence, l'utilisateur peut spécifier le niveau de charge minimale de la batterie 106 via le panneau de commande de la borne 104.

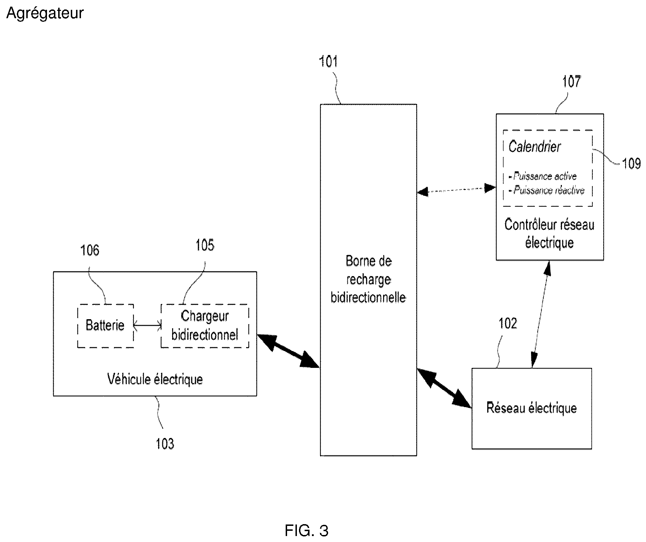

En référence à la Figure 3, on montre un système de recharge bidirectionnelle pour véhicule électrique comprenant une borne bidirectionnelle 101 raccordée au réseau électrique 102. Le véhicule électrique 103 est branché à la borne 101 via un câble. Le système comporte un moyen de communication au système de contrôle du réseau électrique 107. Le véhicule intègre un chargeur bidirectionnel 105. Le chargeur bidirectionnel 105 permet le transfert d'énergie électrique de la borne 101 à la batterie du véhicule 106 et l'inverse. Le système de contrôle du réseau 107 module la puissance fournie et retirée au véhicule selon les besoins du réseau à partir d'un calendrier d'événement 109 envoyé à la borne 101.

De préférence, la puissance modulée est active et/ou réactive.

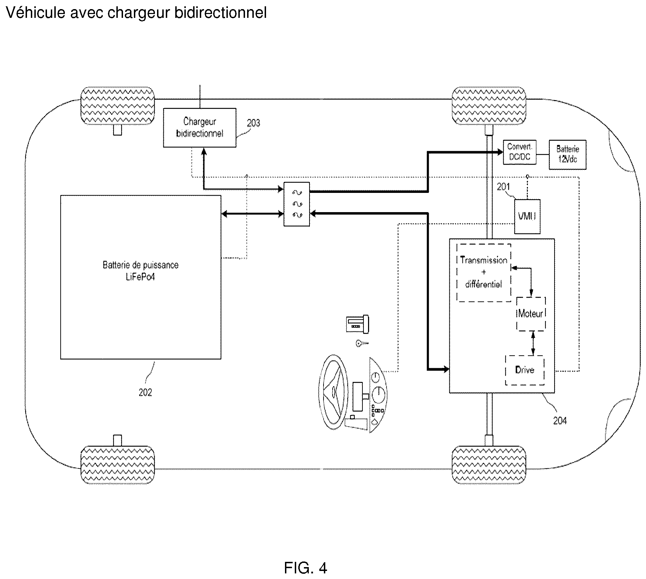

En référence à la Figure 4, on montre véhicule électrique comprenant un système de propulsion électrique à moteur central 204 et un système de gestion véhicule 201. Le véhicule intègre un chargeur bidirectionnel 203 et une batterie LiFePo4 202.

Par exemple, la batterie de puissance 202 peut être composée de 108 cellules en série de types LiFePO4 totalisant une tension nominale de 346 V, une puissance maximale de 100 kW et une énergie totale de 20.7 kWh. Les cellules sont contenues et protégées par un caisson d'aluminium. La batterie 202 est située à l'avant du véhicule.

Un défi important au niveau de l'intégration d'une batterie de puissance 202 dans un véhicule électrique est de placer le volume de la batterie 202 et autres composants requis dans un espace restreint tout en respectant la répartition de la masse sur les essieux. Il est important d'avoir une répartition de masse adéquate afin de conserver une manœuvrabilité similaire à un véhicule à combustion.

Les revendications ne doivent pas être limitées dans leur portée par les réalisations préférentielles illustrées dans les exemples, mais doivent recevoir l'interprétation la plus large qui soit conforme à la description dans son ensemble.

## Revendications

1. Un système de recharge bidirectionnelle pour véhicule électrique comprenant
une borne bidirectionnelle (101) raccordée au réseau électrique (102),
un véhicule électrique (103) pour branchement à la borne (101) et
un moyen de communication au système de contrôle du réseau électrique (107),
ledit véhicule intégrant un chargeur bidirectionnel (105),
ledit chargeur bidirectionnel permettant le transfert d'énergie électrique de la borne (101) à la batterie du véhicule (106) et l'inverse,
dans lequel le système de contrôle du réseau (107) est adapté pour moduler la puissance fournie et retirée au véhicule selon les besoins du réseau à partir d'un calendrier d'événement (109) envoyé à la borne (101) par ledit système de contrôle du réseau (107).

2. Le système de charge bidirectionnelle selon la revendication 1, dans lequel la puissance modulée est active et/ou réactive.

## Patentansprüche

1. Ein bidirektionales Aufladesystem für Elektrofahrzeug, umfassend
eine bidirektionale Ladesäule (101), die mit dem Stromnetz (102) verbunden ist,
ein Elektrofahrzeug (103) zum Anschluss an die Ladesäule (101) und
ein Mittel zum Kommunizieren mit dem Steuersystem des Stromnetzes (107),
wobei das Fahrzeug ein bidirektionales Ladegerät (105) integriert,
wobei das bidirektionale Ladegerät die Übertragung von elektrischer Energie von der Ladesäule (101) zu der Batterie des Fahrzeugs (106), und umgekehrt, gestattet,
wobei das Steuersystem des Netzes (107) eingerichtet ist, um die vom Fahrzeug bereitgestellte und entnommene Leistung gemäß den Bedürfnissen des Netzes anhand eines Zeitplans (109), der durch das Steuersystem des Netzes (107) an die Ladesäule (101) gesendet wird, zu modulieren.

2. Das bidirektionale Aufladesystem nach Anspruch 1, wobei die modulierte Leistung Wirkleistung und/oder Blindleistung ist.

## Claims

1. A bidirectional charging system for electric vehicles, comprising
a bidirectional station (101) connected to the electrical grid (102),
an electric vehicle (103) to be connected to the station (101), and
a communication means to the electrical grid control system (107), said vehicle incorporating a bidirectional charger (105),
said bidirectional charger (105) enabling a transfer of electrical energy from the station (101) to the battery of the vehicle (106) and *vice versa,*
wherein the grid control system (107) is adapted to modulate the power provided to and withdrawn from the vehicle according to the requirements of the grid based on an event calendar (109) transmitted to the station (101) by said grid control system (107).

2. The bidirectional charging system according to claim 1, wherein the modulated power is active and/or reactive.
